# EUROPÄISCHE PATENTSCHRIFT

(11) **EP 1 068 922 B1**
(45) Veröffentlichungstag und Bekanntmachung des Hinweises auf die Patenterteilung: **16.02.2005**
(21) Anmeldenummer: 00111552.6
(22) Anmeldetag: 30.05.2000
(51) Int. Cl.: B23H 11/00, B23H 7/02, B23H 1/00, B23Q 37/00, B23Q 1/01

(54) **Funkenerosionsmaschine**
Electro-erosion machine
Machine pour usinage par électroérosion

(30) Priorität: 13.07.1999 DE 19932645
(43) Veröffentlichungstag der Anmeldung: 17.01.2001
(73) Patentinhaber: AGIE SA, 6616 Losone (CH); CHARMILLES TECHNOLOGIES S.A., 1242 Satigny (CH)
(72) Erfinder: Wehrli, Peter, 6612 Ascona (CH); Brun, René, 01280 Prévessin (FR)
(74) Vertreter: Niederkofler, Oswald A., Dipl.-Phys.

(56) Entgegenhaltungen:
- EP-A- 0 319 731
- EP-A- 0 507 741
- DE-A- 3 524 377
- DE-A- 3 824 602
- PATENT ABSTRACTS OF JAPAN vol. 013, no. 006 (M-781), 9. Januar 1989 (1989-01-09) -& JP 63 216628 A (AMADA CO LTD), 8. September 1988 (1988-09-08)
- PATENT ABSTRACTS OF JAPAN vol. 009, no. 152 (M-391), 27. Juni 1985 (1985-06-27) -& JP 60 029209 A (MITSUBISHI DENKI KK), 14. Februar 1985 (1985-02-14)
- PATENT ABSTRACTS OF JAPAN vol. 013, no. 282 (M-843), 28. Juni 1989 (1989-06-28) -& JP 01 078723 A (AMADA CO LTD), 24. März 1989 (1989-03-24)

## Beschreibung

Die Erfindung betrifft eine Funkenerosionsmaschine, insbesondere eine Schneiderosionsmaschine und deren Achsanordnung.

Funkenerosionsmaschinen sind z.B. in Form von Schneidund Senkerosionsmaschinen weit verbreitet. Es wird dabei ein Bearbeitungswerkzeug in Form einer Drahtelektrode oder einer Senkelektrode relativ zu einem auf einem Werkzeugtisch aufgespannten Werkzeug bewegt, um eine elektrische Funkenentladung zwischen der Bearbeitungselektrode und dem Werkstück hervorzurufen. Der Aufbau der Maschine umfaßt im wesentlichen ein Maschinengestell mit einer Antriebskinematik zur Erzeugung der die Bearbeitungskontur bestimmende Relativverschiebung zwischen Werkstück und Bearbeitungselektrode, einen Werkzeugtisch mit geeigneten Spannmittel zur Aufnahme eines oder mehrerer Werkstücke, einen Generator, eine CNC-Steuerung sowie Einrichtungen für die Spülung des Arbeitsspaltes und der Aufbereitung einer ggf. verwendeten Arbeitsflüssigkeit.

Werkzeugmaschinen und vor allem Funkenerosionsmaschinen sind vielfältig einsetzbar. Daher haben sich im Laufe der Zeit verschiedene Bauformen abhängig von den jeweiligen Anforderungen, wie Verkaufspreis, Unterhaltskosten, Werkstücksgröße und maximale Verfahrwege, Qualität, Produktivität, Flexibilität und Automatisierbarkeit, Platzbedarf, Bedienungskomfort etc., entwickelt. Der Schwerpunkt bei der Entwicklung einer Werkzeugmaschine kann daher ganz unterschiedlich gesetzt werden. Häufig sind derartige Anforderungen auch gegenläufig, wie etwa der Platzbedarf der Maschine einerseits und die maximal zulässige Werkstücksgröße andererseits. Es wäre gerade im letztgenannten Fall wünschenswert, eine möglichst kompakte Bauweise zu haben, trotzdem aber auch größere Werkstücke bearbeiten zu können. Diesen Anforderungen werden z.B. die bisher bekannten Bauformen für Funkenerosionsmaschinen nur im beschränkten Maße gerecht.

Beispielsweise besitzen die meisten erhältlichen Schneiderosionsmaschinen ein C-Maschinengestell oder ein Portalgestell. Ein Beispiel für eine Schneiderosionsmaschine in C-Gestell-Bauweise ist in der DE 35 24 377 A1 der Anmelderin beschrieben. Das C-Gestell ist aus mehreren Blöcken, nämlich einem Maschinenbett, einem Ständer und einem Maschinenkopf aufgebaut. Die Drahtelektrode ist zwischen einem oberen und einem unteren Drahtführungskopf im Arbeitsraum der Maschine gespannt und wird relativ zum Werkstück in einer X/Y-Hauptachsenebene bewegt. Hierfür sind unterschiedliche Achsanordnungen vorgesehen: die Hauptachsenbewegung in X/Y-Richtung wird mit einem gekoppelten X/Y-Kreuztisch durchgeführt, der entweder den Arbeitstisch, den Ständer des Maschinengestells oder den Kopf des Maschinengestells in den X/Y-Hauptachsenrichtungen bewegt.

Bei einer Schneiderosionsmaschine in Portalbauweise besteht das Maschinengestell aus einem Maschinenbett und einer darauf angeordneten geschlossenen portalartigen Säule. Auf dem Maschinenbett ist ein Arbeitstisch samt Arbeitsbehälter in eine Hauptachsenrichtung, z.B. die Y-Richtung, verschiebbar gelagert angeordnet. Die X-Vorschubbewegung der Drahtelektrode ist davon entkoppelt und wird durch einen X-Schlitten bewirkt, der auf dem Querträger der Portalsäule oberhalb des Arbeitsraumes vertikal verschiebbar ist. Eine solche Portalmaschine eignet sich auch zur Bearbeitung großer Werkstücke; sie benötigt andererseits aber auch einen entsprechend großen Aufstellungsplatz. Außerdem ist der Arbeitsraum der Maschine aufgrund der geschlossenen Bauweise nur bedingt zugänglich und eignet sich daher nur begrenzt für die Integration von Automatisierungsmaßnahmen.

In der US 5 243 165 ist ein weiteres Machinenkonzept für eine Schneiderosionsmaschine beschrieben, bei welchem ähnlich wie bei der Portalbauweise die X/Y-Hauptachsenschlitten unabhängig voneinander angeordnet sind. Das Maschinengestell ist nach Art eines C-Gestells mit einem Maschinenbett und einer daran befestigten vertikalen Säule aufgebaut. In einer horizontalen Ebene auf dem Maschinenbett ist ein X-Schlitten verschiebbar angeordnet, auf welchem der Werkzeugtisch samt Arbeitsbehälter sitzt. Das Werkstück ist somit nur in X-Richtung bewegbar. Ein Y-Schlitten, mit welchem der obere und untere Drahtführungskopf gekoppelt ist, ist direkt auf der Maschinensäule angeordnet und bewegt nur die Drahtelektrode in Y-Richtung. Ein weiteres unmittelbar am oberen Drahtführungskopf angeordnetes Kreuztischsystem (sog. U/V-Kreuztisch) erlaubt die relative Auslenkung des oberen gegenüber dem unteren Drahtführungskopf. Zusätzlich ist ein Z-Antrieb für den oberen Drahtführungskopf vorgesehen.

Bei dieser Bauweise, aber auch bei der zuvor genannten C-Gestellbauweise, ist nachteilig, daß das aus mehreren Teilen, wie Maschinenbett, Säule und ggf. Maschinenkopf, zusammengesetzte Maschinengestell in der sog. Zwei- bzw. Mehrblockbauweise bei hohen Genauigkeitsanforderungen nicht genügend Eigensteifigkeit besitzt. Folglich muß der Aufstellplatz der Maschinen erhöhte Anforderungen an die Bodensteifigkeit erfüllen. Beispielsweise müssen die Maschinensäule als auch das Maschinenbett zum Boden mehrfach abgestützt werden. Das Aufstellen und Ausrichten einer derartigen Maschinen gestaltet sich sehr aufwendig, insbesondere muß die Montage der verschiedenen Bestandteile des Maschinengestells besonders sorgfältig erfolgen, damit die Rechtwinkligkeit der Achsbewegungen erfüllt ist.

Ferner ist in der Zeitschrift "Werkzeug & Formenbau", Februar 1999, Seite 30, zwar eine 3-Achsen-Fräsmaschine gezeigt, bei welcher X- und Y-Schlitten unabhängig voneinander bewegbar sind. Zudem ist der X-Schlitten in Art einer Konsole seitlich am Maschinengestell verschiebbar angeordnet und der mit einem Z-Antrieb ausgestattete Y-Schlitten auf der Oberseite des Maschinengestells angeordnet. Details über den Aufbau des Maschinengestells sind jedoch nicht offenbart. Des weiteren fehlt jeglicher Hinweis in Richtung einer Funkenerosionsmaschine.

Dokument JP01078723, das den nächstliegenden Stand der Technik darstellt offenbart eine Funkenerosionsmaschine mit einem Maschinengestell, das einen zentralen Maschinenkörper aufweist, eine Bearbeitungselektrode zum Bearbeiten eines Werkstückes, wobei die Bearbeitung durch eine Relativbewegung in die X/Y-Hauptachsenrichtung(en) zwischen der Bearbeitungselektrode und dem Werkstück erfolgt und wobei ein erster Achsschlitten zum Bewegen des Werkstückes in die eine Hauptachsenrichtung und ein zweiter Achsschlitten zum Bewegen der Bearbeitungselektrode in die andere Hauptachsenrichtung vorsehen sind.

Die X/Y-Hauptachsenbewegungen werden über einen gekoppelten X/Y-Kreuztisch durchgeführt, der auf dem Maschinenbett angeordnet ist und das Werkstück W in beide X/Y-Hauptachsenrichtungen bewegt. Im Bezug auf die X/Y-Hauptachsenrichtungen ruht demnach die Bearbeitungselektrode bei der bekannten Funkenerosionsmaschine. Die Drahtelektrode kann lediglich mit den zusätzlichen U/V-Achsschlitten in U/V-Richtung versetzt werden, um konische Schnitte zu erzeugen.

Die vorliegende Erfindung zielt darauf ab, den Aufbau bekannter Funkenerosionsmaschinen im Hinblick auf eine höhere Bearbeitungsgenauigkeit weiter zu entwickeln.

Die Erfindung erreicht dieses Ziel durch den Gegenstand des unabhängigen Anspruches 1. Weitere Aspekte der Erfindung ergeben sich aus den abhängigen Ansprüchen, der nachfolgenden Beschreibung und der Zeichnung.

Danach umfaßt eine erfindungsgemäße Funkenerosionsmaschine ein Maschinengestell, das einen zentralen Maschinenkörper aufweist; eine Bearbeitungselektrode zum Bearbeiten eines Werkstückes, wobei die Bearbeitung durch eine Relativbewegung in die X/Y-Hauptachsenrichtung(en) zwischen der Bearbeitungselektrode und dem Werkstück (60) erfolgt; und einen ersten Achsschlitten zum Bewegen des Werkstückes in die eine Hauptachsenrichtung und einen zweiten Achsschlitten zum Bewegen der Bearbeitungselektrode in die andere Hauptachsenrichtung, wobei der erste Achsschlitten in einer im wesentlichen vertikalen Ebene unmittelbar am Maschinenkörper in horizontaler Richtung verschiebbar angeordnet ist.

Nach dem erfindungsgemäßen Maschinenkonzept besitzt das Maschinengestell im wesentlichen nur einen einzigen selbsttragenden Maschinenkörper, der sich gegenüber dem Boden abstützt. Im Gegensatz zur Mehrblockbauweise bekannter Funkenerosionsmaschinen, insbesondere der aus US 5 243 165 bekannten Zweiblockbauweise, basiert die erfindungsgemäße Funkenerosionsmaschine auf einer kompakten Monoblockbauweise, wobei die X/Y-Hauptachsenschlitten unmittelbar mit dem monoblockartigen Maschinenkörper verbunden sind. Dies gewährleistet eine hohe Steifigkeit der Anordnung insgesamt, eine sehr gute Rechtwinkligkeit der X/Y-Hauptachsenbewegung und vor allem einen kurzen Kraftflußübertragungsweg zwischen der Bearbeitungselektrode und dem Werkstück sowie kurze Strompfade für eine bessere Impulsübertragung an die Funkenstrecke, - alles zusammen hervorragende Voraussetzungen für eine hohe Bearbeitungsgenauigkeit der Maschine. Als weitere Vorteile kommen der geringe Platzbedarf der erfindungsgemäßen Maschine sowie die im Grunde einfache Konstruktion des Maschinengestells und die damit verbundenen wirtschaftlichen Herstellungskosten der Gesamtanlage. Weiterhin sind aufgrund der Entkopplung der beiden Hauptachsenschlitten in X- und Y-Richtung ohne weiteres auch größere Verfahrwege und damit die Bearbeitung von größeren Werkstücken möglich.

Bevorzugt sind der erste Achsschlitten - angenommen der X-Schlitten - in einer im wesentlichen vertikalen Ebene seitlich am Maschinenkörper und der zweite Achsschlitten - angenommen der Y-Schlitten - in einer im wesentlichen horizontalen Ebene auf der Oberseite des Maschinenkörpers befestigt. Die X- und Y-Schlitten sind dabei zum Beispiel auf Führungsschienen, welche unmittelbar auf dem Maschinenkörper liegen bzw. seitlich am Maschinenkörper angeordnet sind, verschiebbar, wodurch die Belastungsbedingungen für die X- und Y-Schlitten in jeder Position im wesentlichen gleich bleiben. Durch die Anordnung der X/Y-Hauptachsenschlitten auf zueinander senkrechten Flächen des Maschinenkörpers ist es im Gegensatz zur Mehrblockbauweise relativ einfach die Rechtwinkligkeitsbedingung einzuhalten.

Bevorzugt weist der erste Achsschlitten einen verschiebbar gelagerten konsolenartigen Schlitten zur Verschiebung des Werkstückes z.B. in die X-Hauptachsenrichtung mit einer im wesentlichen horizontalen Werkstücksauflagefläche auf. Auf dieser beweglichen Konsole sind vorzugsweise geeignete Mittel zum Befestigen eines oder mehrerer Werkstücke vorhanden. Zusätzlich dient der konsolenartige Schlitten, wie nachfolgend noch näher erläutert wird, bevorzugt als Basis für die Aufnahme eines absenkbaren Arbeitsbehälters. Der konsolenartige Schlitten und damit das/die aufgespannte(n) Werkstück(e) ist/sind von drei Seiten frei zugänglich, einschließlich des freien Zuganges unterhalb der Konsole, der nicht wie üblich durch das Maschinengestell versperrt ist. Somit ist der Arbeitsraum der Maschine zum Be- und Entladen sowie zum Messen und Kontrollieren der Bearbeitung sehr gut zugänglich, und zwar sowohl für den Bediener als auch für allfällige Automatisierungsmittel, wie Roboter, etwaige Wechselsysteme, Meß- und Überwachungsgeräte oder sonstige Mittel.

Bevorzugt umfaßt der konsolenartige Schlitten eine im wesentlichen vertikale Montageplatte, welche über Führungsschlitten auf einem Schienenpaar am Maschinenkörper geführt ist. Diese Montageplatte ist vergleichbar mit einem in X/Y-Ebene ausgerichteten Arbeitstisch einer konventionellen Maschine, der hier jedoch um 90° gedreht ist. Die Montageplatte weist eine hohe Steifigkeit und eine ausreichende Abmessung auf, so daß sie als Basis für eine Werkstücksauflage und ggf. für die Rückwand eines Arbeitsbehälters dienen kann. Vorzugsweise ist eine balkenartige Werkstücksauflage für die Abstützung eines Werkstückes unmittelbar auf der Montageplatte befestigt, wodurch vorteilhaft ein kurzer Kraftflußweg zum Werkstück und somit auch eine hohe Steifigkeit der Anordnung gewährt wird. Bei diesem Aufbau des konsolenartigen Schlittens, dessen Komponenten ohne besondere Schwierigkeiten genau gefertigt werden können, ist ohne großen Aufwand eine gute geometrische Grundgenauigkeit erzielbar.

Bekanntlich wird die hochgenaue Funkenerosionsbearbeitung meist in einem Bad aus einer dielektrischen Arbeitsflüssigkeit zum Spülen des Arbeitsspaltes und zur thermischen Stabilisierung des Werkstückes ausgeführt. Hierfür ist ein entsprechender Behälter zur Aufnahme der Arbeitsflüssigkeit (nachfolgend "Arbeitsbehälter" genannt) vorgesehen, der den Arbeitsraum der Maschine umgibt und vor jeder Bearbeitung mit der Arbeitsflüssigkeit aufgefüllt wird. Nach Beenden der Bearbeitung wird die Arbeitsflüssigkeit aus dem Arbeitsbehälter abgelassen und der Arbeitsbehälter zum Be- und Entladen des Werkstückes geöffnet. Das erfindungsgemäße Maschinenkonzept schafft hier einen entscheidenden Vorteil: da der Bereich unterhalb der beweglichen Konsole weitgehend frei ist, läßt sich die erfindungsgemäße Maschine mit einem vertikal absenkbaren Arbeitsbehälter ausstatten. Dieser Arbeitsbehälter Läßt sich frei, ohne Hindernisse, vertikal nach unten bewegen, so daß der Arbeitsraum von zumindest drei Seiten frei zugänglich ist, z.B. zum Be- und Entladen sowie zum Messen und Kontrollieren der Bearbeitung. Die erfindungsgemäße Bauweise eignet sich daher hervorragend zur Implementierung von Automatisierungsmaßnahmen, z.B. die Automatisierung der Arbeitsbehältervorgänge und die Einbeziehung von Palettenwechslern und Robotern in Produktions- bzw. Transferstraßen. Auch ein Laden mit Hilfe eines Staplers ist aufgrund des von unten frei zugänglichen konsolenartigen Schlittens begünstigt.

Bevorzugt ist der Arbeitsbehälter aus einem beweglichen, Behälterteil, welcher auf der zum Maschinenkörper hin gewandten Seite (Behälterrückseite) offen ist, und einer feststehenden Rückwand aufgebaut, welche unmittelbar auf der Montageplatte des konsolenartigen Schlittens befestigt ist; oder die Montageplatte bildet selbst die Rückwand des Arbeitsbehälters. An beiden seitlichen Wänden des Arbeitsbehälters sind vorzugsweise vertikal verlaufende Führungsschienen mit einem entsprechenden Hebemechanismus vorgesehen, so daß der Arbeitsbehälter, oder besser der bewegliche Teil des Arbeitsbehälters, aus einer Arbeitsposition schnell in eine abgesenkte Position bewegt werden kann. Durch den zweiteiligen Aufbau ist gewährleistet, daß ohne aufwendige Bewegungs- und Abdichtungsmechanismen ein automatisch absenkbarer Arbeitsbehälter seine Funktion sicher erfüllen kann. Ferner hat die Aufteilung in nur zwei Teile den Vorteil einer Minimierung von Dichtungsproblemen auf wenige Flächen; zusätzlich den Vorteil eines vergleichsweise stabilen Arbeitsbehälters.

Bei einer besonders bevorzugten Ausführungsform ist die Behälterrückwand und/oder die Montageplatte so weit verlängert sind, daß der bewegliche Behälterteil auch in abgesenkter Position an der Behälterrückwand oder an der Montageplatte anliegt, so daß auch in dieser Position bei Bedarf eine "Halten" der Arbeitsflüssigkeit im Arbeitsbehälter möglich ist. Im Gegensatz zu bekannten Bauweisen kann damit der Arbeitsraum der erfindungsgemäßen Maschine zugänglich gemacht werden, ohne daß, wie üblich, die Arbeitsflüssigkeit entleert werden muß. Bei Bedarf wird der erfindungsgemäße bewegliche Behälterteil samt der darin enthaltenen Arbeitsflüssigkeit einfach vertikal in die abgesenkte Position verschoben, in welcher er dennoch einen dichten Aufnahmebehälter für die Arbeitsflüssigkeit bildet. Damit kann die Zeit, die benötigt wird, um den der Arbeitsraum der Maschine für einen Bediener oder eine automatische Vorrichtung zugänglich zu machen, erheblich reduziert werden, was für eine drastische Verbesserung der Arbeitseffizienz sorgt; außerdem kann die Funkenerosionsmaschine auch in den Zustand des abgesenkten Arbeitsbehälters durch die enthaltene Arbeitsflüssigkeit thermisch stabilisiert werden. Bei einer weiteren bevorzugten Ausführungsform kann die Regulierung des Niveaus der Arbeitsflüssigkeit im Arbeitsbehälter durch einen im vertikal beweglichen Behälterteil integrierten Überlauf, z.B. in Form von einem oder mehreren Überlaufschlitzen in der Behälterwand, erfolgen, der auf der Höhe des gewünschten Flüssigkeitspegels angeordnet ist.

Für die Abdichtung des beweglichen Behälterteils gegenüber der festen Behälterrückwand (oder der Montageplatte selbst) ist vorzugsweise entlang der der Rückwand zugewandten Kontaktflächen des beweglichen Behälterteils zumindest abschnittsweise eine mit einem Fluid beaufschlagbare, z.B. durch Luft aufblasbare, Dichtung oder ein Dichtungsprofil aus einem Elastomer oder eine Kombination davon angeordnet. Die Befestigung der Dichtung(en) kann z.B. durch Kleben, Klammern oder Eindrücken in entsprechende Profilhalter erfolgen. Wenn der bewegliche Teil des Arbeitsbehälters die oberste Position erreicht, wird die statisch arbeitende Dichtung mit dem Fluid beaufschlagt, wodurch sie die Dichtigkeit gegenüber der Rückwand des Arbeitsbehälters (oder der Montageplatte) herstellt. Auf diese Weise können Be- und Entladevorgänge an der Maschine rasch erfolgen, genauso schnell kann durch Absenken des Arbeitsbehälters das Werkstück und die Bearbeitungselektrode rasch frei zugänglich gemacht werden.

Bei einer besonders kompakten Variante hat der Maschinenkörper eine im wesentlichen quaderartige Form und ist über mehrere, insbesondere drei, Säulen zum Boden abgestützt. Damit wird das Volumen des Maschinenkörpers kleiner und der Raum unterhalb des Maschinenkörpers kann etwa für die Unterbringung weiterer Maschinenkomponenten, wie einem Dielektrikumsaggregat, einem Altdraht-Sammelbehälter oder Modulen der Steuerung und des Generators, verwendet werden. Der Maschinenkörper kann alternativ auch direkt auf die zuvor aufgeführten Maschinenkomponenten abgestützt werden, ohne besondere Stützsäulen. Bei einer mittleren Baugröße ist der Maschinenkörper in idealer Weise auf drei Auflagestellen abgestützt. Bei größeren Maschinen nach vorliegendem Konzept kann der Maschinenkörper bis zum Boden gebaut werden und sich dort auf drei oder mehr Auflagestellen abstützen. In diesem Fall sind bevorzugt Hohlräume im Maschinenkörper zur Aufnahme von Modulen vorgesehen.

Bevorzugt ist die gesamte Maschine in einer Wanne aufgestellt, wobei sich ein Aggregat zur Aufbereitung der Arbeitsflüssigkeit zumindest teilweise im Bereich unterhalb des absenkbaren Arbeitsbehälters befindet. Eine solche Anordnung ist besonders vorteilhaft, weil man lange Leitungen für Übertragung der Arbeitsflüssigkeit in und aus dem Arbeitsbehälter vermeidet und somit das Auffüllen und Entleeren des Arbeitsbehälters entsprechend rasch erfolgen kann. Desweiteren kann das Dielektrikum-Aggregat auch zur Aufnahme einer etwaigen Leckageflüssigkeit aus dem Arbeitsbehälter ausgelegt sein und diese automatisch in die Aufbereitung der Arbeitsflüssigkeit zurückführen.

Das erfindungsgemäße Maschinenkonzept sieht besonders bevorzugt auch weitere Achsbewegungssysteme vor. Zur Anpassung der Bearbeitungselektrode an die jeweilige Werkstückshöhe ist beispielsweise ein Z-Antrieb zur Verschiebung der Bearbeitungselektrode oder eines Elektrodenkopfes in vertikaler Richtung vorgesehen ist. Im Falle einer Schneiderosionsmaschine können mit einem in Z-Richtung verschiebbaren oberen Drahtführungskopf die Vertikalkonturen unebener oder ungleich hoher Werkstücke einfach kompensiert werden. Dies führt ebenfalls zu höheren Abtragsleistungen und/oder einer besseren Präzision der Bearbeitung.

Die bisherigen Ausführungen haben sich auf Funkenerosionsmaschinen allgemein bezogen, d.h. die erfindungsgemäße Bauart ist z.B. für Schneiderosionsmaschinen und Senkerosionsmaschinen gleichermaßen anwendbar. Bei einer bevorzugten Variante einer Schneiderosionsmaschine ist die Bearbeitungselektrode eine Drahtelektrode, die zwischen einem oberen und einem unteren Drahtführungskopf im Arbeitsraum der Maschine geführt ist, wobei der obere und untere Drahtführungskopf jeweils über einen entsprechenden Drahtführungsarm mit dem zweiten Achsschlitten gekoppelt sind, um mit dem zweiten Achsschlitten die Drahtelektrode in eine der Hauptachsenrichtungen - angenommen die Y-Richtung - zu bewegen. Desweiteren sieht das erfindungsgemäße Maschinenkonzept für eine Schneiderosionsmaschine vor, daß der obere gegenüber dem unteren Drahtführungskopf in einer horizontalen Ebene, sogenannte U/V-Ebene, verschiebbar ist, um konische Schnitte durchführen zu können. Hierfür sind im Übertragungsweg zwischen dem oberen Drahtführungskopf und dem zweiten Achsschlitten zwei rechtwinklig zueinander verstellbare U/V-Achsenschlitten, z.B. ein kartesischer U/V-Kreuzschlitten, eingefügt.

Das Maschinenkonzept einer Schneiderosionsmaschine sieht bevorzugt vor, daß der untere Drahtführungsarm im Inneren des Maschinenkörpers verläuft und durch eine langlochartige, in Richtung der einen Hauptachse, z.B. X-Achse, orientierte, Öffnung der Montageplatte des konsolenartigen Schlittens und der ggf. befestigten Arbeitsbehälterrückwand in den Arbeitsraum der Maschine ragt, wobei der untere Drahtführungsarm durch ein erstes in Axialrichtung des Drahtfürungsarmes elastisches Dichtungsmittel und durch ein zweites quer zur Axialrichtung gleitfähiges Dichtungsmittel gegenüber dem Arbeitsbehälter abgedichtet ist. Bevorzugt ist das erste Dichtungsmittel eine den Drahtführungsarm konzentrisch umgebende Faltenbalgdichtung; und das zweite Dichtungsmittel zur gleitfähigen Abdichtung zwischen dem Drahtführungsarm und dem Arbeitsbehälter weist bevorzugt zumindest ein Gleitteil und ein elastisches Ausgleichselement, wobei das elastische Ausgleichselement unter Beaufschlagung durch ein Fluid, z.B. eine mit Druckluft beaufschlagbare Gummidichtung, eine Kraft auf das Gleitteil ausübt. Weitere Varianten für eine hier geeignete gleitfähige Abdichtung sind beispielsweise aus der EP 0 467 060 A1 der Anmelderin bekannt, welche hier durch Bezugnahme zum Inhalt der vorliegenden Anmeldung gehört. Grundsätzlich sind aber auch alle möglichen Kombinationen dieser Dichtungen einsetzbar. Vorteilhaft ist dabei, daß mit diesen Maßnahmen eine betriebssichere, auf einfache Weise und mit vernünftigem Aufwand herstellbare und montierbare Abdichtung realisierbar ist. Dennoch kann sich der untere Drahtführungsarm gegenüber dem Arbeitsbehälter mit geringem Widerstand und fluiddicht in den X/Y-Hauptachsenrichtungen bewegen.

Nach einem weiteren Gedanken der Erfindung sind die Grundelemente des hier beschriebenen Maschinenkonzeptes nicht nur für Funkenerosionsmaschinen sondern auch für andere Typen von Werkzeugmaschinen verwendbar, bei welchem die Bearbeitung durch eine Relativbewegung in X/Y-Hauptachsenrichtung(en) zwischen einem Bearbeitungswerkzeug und einem Werkstück erfolgt, z.B. Fräsmaschine, Bohrmaschine, Schleifmaschine oder ähnliche. Hierzu stellt die Erfindung einen Modulsatz für den Zusammenbau von Werkzeugmaschinen, insbesondere von Funkenerosionsmaschinen, mit mehreren folgender Module zur Verfügung: einen zentralen Maschinenkörper; einen ersten konsolenartigen Schlitten zur Verschiebung eines Werkstückes in einer ersten Hauptachsenrichtung - angenommen die X-Richtung - und zur Anordnung in einer im wesentlichen vertikalen Ebene unmittelbar an dem Maschinenkörper; und einen zweiten Achsschlitten zur Verschiebung eines Bearbeitungswerkzeuges in einer zweiten Hauptachsenrichtung - angenommen die Y-Richtung - und zur Anordnung an dem Maschinenkörper wobei diese Module derart ausgelegt sind, daß sie für den Zusammenbau verschiedenartiger Werkzeugmaschinen, z.B. Senkerosionsmaschine, Schneiderosionsmaschine, Fräsmaschine oder ähnliche, verwendet werden können. Diese Grundmodule bilden die Bausteine eines Baukastens, mit welchem verschiedenartige Werkzeugmaschinen zusammengebaut werden können. Die einfachste Variante der Erfindung besteht darin, lediglich die Grundelemente zu verwenden, um z.B. eine Fräs- oder Senkerosionsmaschine zu bauen. Bei einer erweiterten Variante mit zusätzlichen U/V- und/oder Z-Antrieben erreicht man bereits eine Schneiderosionsmaschine. Es können also die gleichen substantiellen Maschinenmodule für unterschiedliche Maschinenvarianten eingesetzt werden, mit dem Vorteil einer preiswerteren Herstellung von Werkzeugmaschinen.

Zusammenfassend ergeben sich durch das erfindungsgemäße Maschinenkonzept folgende Vorteile für den Werkzeugmaschinenbau:
- eine kompakte, selbsttragende Monoblockbauweise mit kurzem Kraftflußweg zwischen Werkzeug und Werkstück, d.h. eine hohe mechanische Steifigkeit und damit eine hohe Genauigkeit der Bearbeitung;
- eine gute Zugänglichkeit von mindestens drei Seiten zum Arbeitsraum und freier Zugang unter dem konsolenartigen Schlitten, z.B. Laden mit Stapler möglich;
- eine problemlose Implementierung von Automatisierungsmaßnahmen möglich, insbesondere Automatisierung des Arbeitsbehälters, Palettenwechsler oder Roboter;
- einfache Konstruktion und niedrige Herstellungskosten der Gesamtmaschine;
- geringer Raumbedarf; und
- ein modulares Konzept für den Zusammenbau verschiedenartiger Werkzeugmaschinen.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. Darin zeigen:
- Fig. 1: einen Längsschnitt der wesentlichen Komponenten einer ersten Variante einer erfindungsgemäßen Funkenerosionsmaschine;
- Fig. 2: einen Längsschnitt der Funkenerosionsvorrichtung gemäß Fig. 1 mit zusätzlichen Komponenten;
- Fig. 3: eine Detailansicht im Längsschnitt vom unteren Drahtführungsarm und der X-Konsole der Funkenerosionsmaschine gemäß Fig. 1.;
- Fig. 4: eine vergrößerte Teilansicht der Dichtungselemente zwischen unterem Drahtführungsarm und Arbeitsbehälter aus Fig. 3; und
- Fig. 5: einen Längsschnitt einer weiteren Variante der erfindungsgemäßen Funkenerosionsmaschine in Form einer Senkerosionsmaschine.

Im nachfolgenden wird das erfindungsgemäße Maschinenkonzept anhand einer Schneid- und einer Senkerosionsmaschine beschrieben. Die Beschreibung und die Figuren beschränken sich auf eine Darstellung der wesentlichen zum Verständnis der Erfindung dienenden Komponenten einer Funkenerosionsmaschine. Weitere Maschinenelemente, wie Generator und CNC-Steuerung, sind nicht dargestellt, da sie als selbstverständlich vorausgesetzt werden. Es wird ferner eine Terminologie verwendet, die der leichteren Lesbarkeit der Beschreibung dient, jedoch nicht einschränkend zu verstehen ist; beispielsweise beziehen sich die Ausdrücke "oben" bzw. "unten" auf Funkenerosionsmaschinen mit vertikaler Arbeitsaufstellung. Desweiteren sind in den verschieden Beispielen einander entsprechende Bauteile mit denselben Bezugszeichen gekennzeichnet.

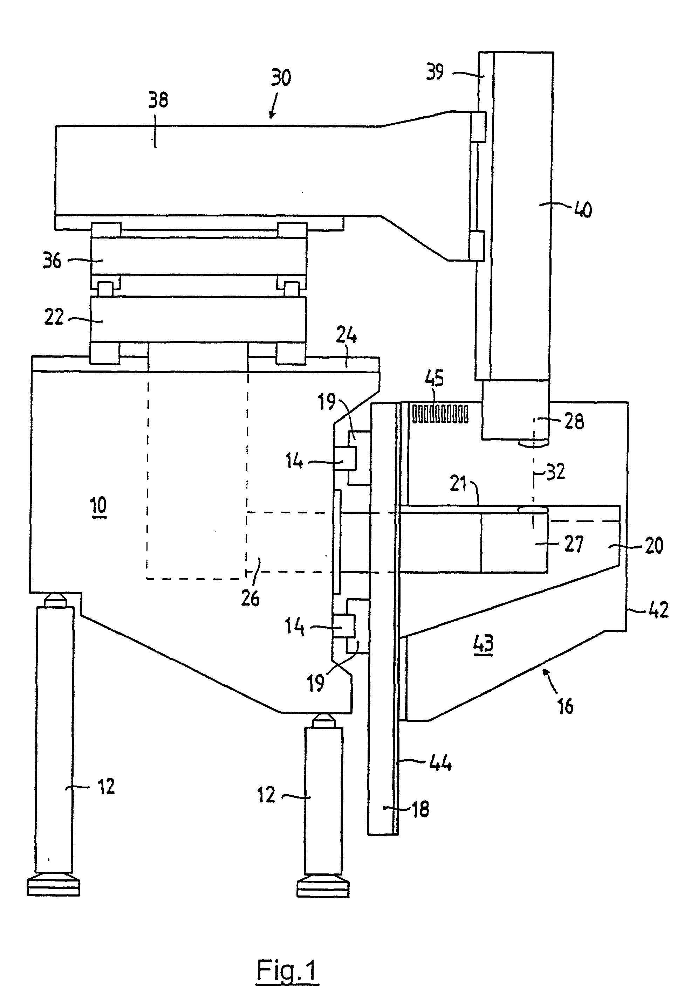

Fig. 1 zeigt eine Schneiderosionsmaschine in der erfinderischen Monoblockbauweise. Das Maschinengestell besteht - abweichend von bekannten Zwei- oder Mehrblockkonstruktionen - im wesentlichen aus einem einzigen zentralen Maschinenkörper 10, der hier auf drei aufrechten Säulen 12 steht, nämlich auf einer hinteren langen und zwei vorderen kürzeren Säulen. Eine solche Abstützung des Maschinenkörpers 10 ist insbesondere für Funkenerosionsmaschinen von mittlerer bis kleiner Baugröße geeignet, größeren erfindungsgemäße Maschinen haben aus Stabilitätsgründen bevorzugt einen geschlossenen Maschinenkörper, der bis zum Boden reicht und ggf. auf drei oder mehr Auflagestellen abgestützt ist.

An einer vertikalen Fläche an der vorderen (zum Arbeitsraum der Maschine gewandten) Seite des Maschinenkörpers 10 ist ein horizontal verlaufendes Schienenpaar 14 befestigt, auf welchem ein konsolenartiger Schlitten 16 in eine Hauptachsenrichtung - angenommen die X-Richtung - verschiebbar gelagert ist. Auf dem konsolenartigen Schlitten 16, der nach Art einer Konsole vom Maschinenkörper 16 seitlich vorsteht und nachfolgend als "X-Konsole" bezeichnet wird, ist eines oder mehrere zu bearbeitende Werkstücke in einer im wesentlichen horizontalen Auflagefläche aufgespannt und vollführt während der Bearbeitung die X-Hauptachsenbewegung.

Die X-Konsole 16 weist einen kompakten Aufbau mit guter geometrischer Grundgenauigkeit auf. Hierzu ist eine vertikale Platte 18 (sogenannte X-Platte) mit vier Führungsschlitten 19 verschraubt, welche jeweils paarweise auf dem Schienenpaar 14 geführt sind. Diese X-Platte 18 dient nach Art eines um 90° gedrehten Werkzeugtisches als Basis für verschiedene Komponenten, wie sie nachfolgend beschrieben werden. Unmittelbar auf der X-Platte 18 eine in Fig. 1 schematisch dargestellte balkenartige Werkstücksauflage 20 befestigt, auf welcher ein (in Fig. 1 nicht dargestelltes) Werkstück mit geeigneten Spannmitteln auf einer horizontalen Werkstücksauflagefläche 21 montiert wird.

Die zweite Hauptachsenbewegung in Y-Richtung bewirkt ein Y-Schlitten 22, der auf einem Schienenpaar 24 in einer horizontalen Ebene auf der Oberseite des Maschinenkörpers 10 in Y-Richtung verschiebbar gelagert ist. Mit dem Y-Schlitten 22 ist unterseitig ein L-förmiger unterer Drahtführungsarm starr verbunden, der durch das Innere des Maschinenkörpers 10 und durch die X-Konsole 16 hinduch in den Arbeitsraum der Maschine ragt und an seinem vorderen Ende einen unteren Drahtführungskopf 27 trägt. In einem Abstand über den unteren Drahtführungskopf ist im Arbeitsraum der Maschine ein oberer Drahtführungskopf 28 angeordnet, der am vorderen freien Ende eines oberen Drahtführungsarmes 30 befestigt ist. Zur Bearbeitung eines Werkstückes wird eine (schematisch angedeutete) Drahtelektrode 32 zwischen dem oberen und unteren Drahtführungskopf 28 bzw. 27 geführt. Die Schnittkontur wird durch die Relativbewegung in X/Y-Richtung zwischen einem Werkstück und der Drahtelektrode 32 bestimmt. Bei dem Ausführungsbeispiel in Fig. 1 ist der obere Drahtführungsarm 30 über mehrere zwischengeschaltete Antriebe, die weiter unten näher erläutert werden, mit dem Y-Schlitten 22 verbunden; und an diesem ist auch der untere L-förmige Drahtführungsarm 26 befestigt, so daß bei einer Verschiebung des Y-Schlittens 22 beide Drahtführungsarme 26 und 30 und damit beide Drahtführungsköpfe parallel in der Y-Hauptachsenrichtung verschoben werden. Das Werkstück steht dagegen in Y-Richtung still und wird durch die Y-Konsole 16 nur in X-Richtung verschoben. Selbstverständlich sind die X-Konsole 16 und der Y-Schlitten 22 jeweils numerisch über eine CNC-Steuerung gesteuert, um so die gewünschte Schnittkontur im Werkstück zu erzeugen.

Bei der bisher beschriebenen Anordnung liegen die Drahtführungsköpfe 27 und 28 vertikal übereinander, so daß man nur gerade Schnitte (parallel zur Z-Achse) ausführen kann. Zum Schneiden konischer Schnitte ist zusätzlich ein sogenannter U/V-Kreuzschlitten zur kartesischen Verstellung des oberen Drahtführungskopfes 28 in einer vertikalen Ebene, der sogenannten U/V-Ebene, gegenüber dem unteren Drahtführungskopf 27 vorgesehen. Hierzu ist direkt auf dem Y-Schlitten 22 eine rechtwinklig dazu verschiebbar gelagerter U-Schlitten 36 angeordnet, und auf diesem nochmals ein weiterer rechtwinklig zum U-Schlitten 36 verschiebbar gelagerter V-Schlitten bzw. V-Ausleger 38 angeordnet. U- und V-Schlitten 36, 38 sind nach Art eines kartesischen Kreuzschlittens miteinander gekoppelt. Des weiteren sind beide Schlitten mit dem Y-Schlitten 22 der Maschine gekoppelt, so daß bei einer Y-Hauptachsenbewegung durch den Y-Schlitten die U- und V-Schlitten automatisch mitgenommen werden.

Des weiteren wird der obere Drahtführungskopf 28 von einer in vertikaler Richtung (Z-Hauptachsenrichtung) verschiebbare Pinole 40 getragen, die am vorderen freien Ende des V-Auslegers 38 über entsprechende Führungsschienen 39 verschiebbar gelagert ist. Diese Anordnung entspricht dabei weitgehendst dem Z-Antrieb einer Senkerosionsmaschine. Bei jeder Verschiebung des Y-Schlittens 22 werden demnach neben den U- und V-Schlitten 36, 38 auch die Pinole 40 mitgenommen. Es versteht sich, daß sämtliche der beschriebenen Achsantriebe jeweils über einen Motor und ein Getriebe sowie über etwaige Gewindespindeln verfügen, welche auf die beschriebenen Führungsschlitten einwirken, um unter Vorgabe der numerischen Steuerung die gewünschte Bewegung zu veranlassen. Alternativ können auch andere Antriebsmittel verwendet werden, wie z.B. Linearmotoren.

Bei der Bauweise gemäß Fig. 1 sind die Führungen der X/Y-Hauptachsenschlitten 16 und 22 direkt am zentralen Maschinenkörper 10 befestigt, und über den Y-Schlitten 22 indirekt auch die U/V- und Z-Antriebe 26, 28 und 40, was bei einer entsprechenden geometrischen Grundgenauigkeit des Maschinenkörpers 10 eine sehr gute Rechtwinkligkeit garantiert und eine hohe Steifigkeit des Aufbaus ermöglicht. Die bewegliche X-Konsole 16 erlaubt eine ausgesprochen gute Zugänglichkeit in den Arbeitsraum sowohl für den Bediener der Maschine als auch für etwaige Automatisierungsmittel, wie Roboter, Wechslersysteme, automatisierte Meß- und Überwachungsgeräte oder sonstige Hilfsmittel.

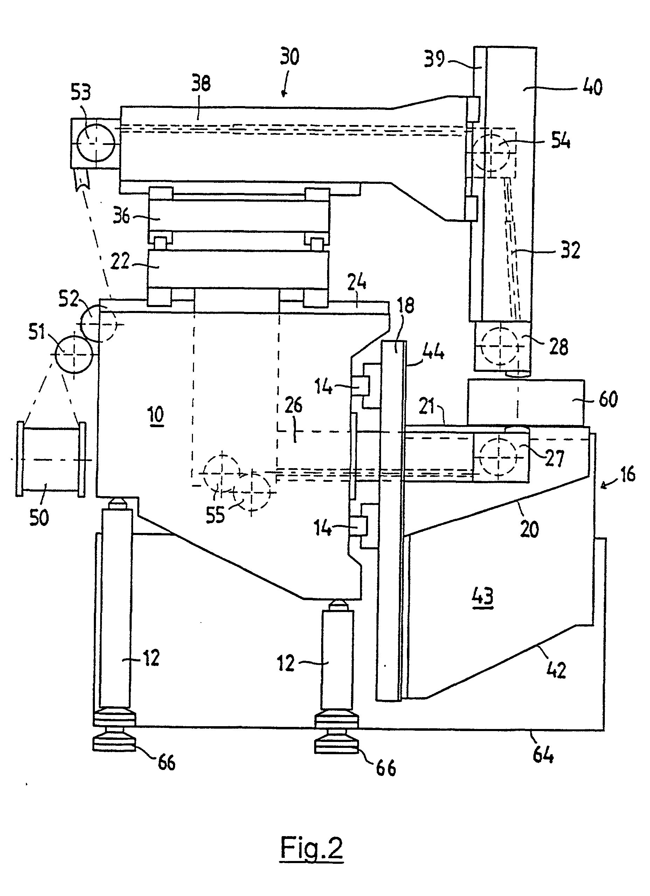

Das Maschinenkonzept der Schneiderosionsmaschine gemäß Fig. 1 ermöglicht vorteilhaft die Integration eines absenkbaren Arbeitsbehälters zur Aufnahme einer Arbeitsflüssigkeit, in welcher die funkenerosive Bearbeitung des Werkstückes stattfindet. Der Raum unterhalb der beweglichen X-Konsole 16 ist weitgehend frei, so daß dorthin ein etwaiger Arbeitsbehälter bei Be- und Entladevorgänge abgesenkt werden kann, um den Zugang in den Arbeitsraum der Maschine von mindestens drei Seiten freizugeben. Ein absenkbare Arbeitsbehälter ist in Fig. 1 mit 42 gekennzeichnet und in seiner Arbeitsposition während der Werkstücksbearbeitung gezeigt (Fig. 2 zeigt den Arbeitsbehälter 42 in abgesenkter Position). Der Arbeitsbehälter 42 setzt sich aus einem zur Seite des Maschinenkörpers 10 hin offenen, vertikal verschiebbaren Behälterteil 43, bestehend aus einer Vorderwand, den beiden Seitenwänden und einem zum Maschinenkörper 10 hin abfallenden Boden, und einer feststehenden Rückwand 44 zusammen, welche unmittelbar an der X-Platte 18 anliegt und daran befestigt ist. Die X-Platte 18 kann mit einer solchen Ebenheit gefertigt werden, daß sich die Rückwand 44 des Arbeitsbehälters 42 ohne Probleme bei der Abdichtung daran abstützen kann. An beiden Seitenwänden des Arbeitsbehälters 42 sind vertikale an der X-Platte 18 verankerte Führungsschienen vorgesehen, an welchen der bewegliche Teil 43 des Arbeitsbehälters 42 mittels eines geeigneten Hebemechanismus vertikal verschiebbar ist. Zur Abdichtung des Kontaktbereiches zwischen der ruhenden Behälterrückwand 44 und dem beweglichen Behälterteil 43 dient z.B. eine durch Luft aufblasbare Gummidichtung, welche an den der Behälterrückwand 44 zugewandten Kontaktflächen der Seiten- und Bodenwände beweglichen Behälterteils 43 zum Dichtungskontakt mit der Rückwand 44 befestigt ist. Wenn der bewegliche Behälterteil 43 in die Arbeitsposition gemäß Fig. 1 hochgefahren wird und diese erreicht, wird die Gummidichtung mit Druckluft beaufschlagt, wodurch eine unter Druck stehende sichere Auflage auf der Behälterrückwand 44 und damit die Dichtigkeit des Arbeitsbehälters 42 hergestellt ist. Die Hebe- und Senkvorgänge des Arbeitsbehälters 42 und die damit einhergehende Betätigung der Gummidichtung werden von der CNC-Steuerung in Abhängigkeit des Bearbeitungsablaufes automatisch gesteuert. Selbstverständlich kann in einer vereinfachten Ausführungsform auch ein einfaches Dichtungsprofil, ohne Druckluftbeaufschlagung eingesetzt werden (sog. Passiv-Dichtung).

Fig. 2 zeigt den gleichen Aufbau einer Schneiderosionsmaschine wie Fig. 1, allerdings mit zusätzlichen Maschinenkomponenten. Es ist der vollständige Verlauf der Drahtelektrode 32 dargestellt, welche von einer Drahtspule 50 an der Rückseite des Maschinenkörpers 10 in bekannter Weise unter Zugspannung abgewickelt und über mehrere Umlenkrollen 51, 52 und 53 und entlang des V-Auslegers 38 zu der Pinole 40 geführt wird. Dort wird die Drahtelektrode 32 erneut durch eine Rolle 54 umgelenkt und läuft zu dem oberen Drahtführungskopf 28, wo sich eine nicht dargestellte Stromzufuhreinheit zur Beaufschlagung mit dem Bearbeitungsstrom befindet. Die Drahtelektrode 32 läuft weiter vom oberen Drahtführungskopf 28 durch den Arbeitsraum, in dem ein Werkstück 60 zur Bearbeitung aufgespannt ist, hindurch zum unteren Drahtführungskopf 27 und wird dort unter erneuter Umlenkung zu einer Drahtziehvorrichtung 55 geführt, welche die Drahtspannung aufrechterhält. Die Drahtführungsköpfe 27 und 28 halten die Drahtelektrode 32 in einer definierten Lage gegenüber dem Werkstück 60. Die X-Konsole 16 erzeugt eine Vorschubbewegung des Werkstücks 60 in X-Hauptachsenrichtung; zusammen mit der durch den Y-Schlitten 22 bewirkten Bewegung vom oberen und unteren Drahtführungskopf 28, 27 und damit der Drahtelektrode 32 in Y-Hauptachsenrichtung und ggf. der U/V-Achsbewegungen ergibt sich die der gewünschten Schnittkontur entsprechende Relativbewegung zwischen dem Werkstück 60 und der Drahtelektrode 32.

Zur thermischen Stabilisierung des Werkstückes 60 findet die funkenerosive Bearbeitung meist in einem Bad einer Arbeitsflüssigkeit statt, welche beim Schneiderodieren in der Regel aus aufbereitetem Wasser besteht. Der Arbeitsbehälter 42 zur Aufnahme des dielektrischen Wassers ist in Fig. 2 in seiner abgesenkten Position dargestellt. Kurz vor Beginn der Bearbeitung wird der Arbeitsbehälter 42 in die Arbeitsposition hochgefahren, wie es in Fig. 1 dargestellt ist und mit Wasser bis einem Pegel aufgefüllt, bei welchem das Werkstück 60 mindestens vollständig im Wasser eingetaucht ist. Ist die Bearbeitung am Werkstück 60 beendet, wird der Arbeitsbehälter 42 wieder abgesenkt und gibt damit den Arbeitsraum zum Be- und Entladen von Werkstücken frei (siehe Fig. 2 ). Dabei ist der bewegliche Behälterteil 43 mit seiner Oberkante auf eine Höhe knapp unterhalb der Unterkante des Werkstückes 60 abgesenkt. Die Behälterrückwand 44 (und die stützende X-Platte 18) erstrecken sich so weit nach unten, daß auch in dieser Position der bewegliche Behälterteil 43 vollständig auf der Behälterrückwand 44 aufliegt und damit der Arbeitsbehälter 42 auch in der abgesenkten Position dicht abgeschlossen ist. Im Gegensatz zu bekannten Bauweisen entfällt hier somit das übliche Entleeren der Arbeitsflüssigkeit immer dann, wenn der Bediener oder eine automatische Vorrichtung einen Zugang zum Werkstück benötigt. Bei Bedarf und je nach Anwendung wird der bewegliche Behälterteil 43 samt Arbeitsflüssigkeit in die abgesenkte Position nach unten verschoben und zum erneuten Bearbeitungsbeginn wieder vertikal samt Arbeitsflüssigkeit nach oben verfahren, währenddessen die Dichtigkeit des Arbeitsbehälters 42 aufrechterhalten wird. Bei dieser Behälteranordnung besteht ferner die Möglichkeit auf eine separate aufwendige Niveauregulierung zu verzichten. Wie in Fig. 1 eingezeichnet, kann die Niveauregulierung durch mehrere Überlaufschlitze 45 erfolgen, welche in den Seitenwänden des vertikal beweglichen Behälterteils 43 in einer horizontalen Ausrichtung eingebracht sind.

Das Aggregat für die Arbeitsflüssigkeit ist in Fig. 2 zumindest teilweise direkt unterhalb des Arbeitsbehälters 42 angeordnet. Hierfür steht die gesamte Schneiderosionsmaschine gemäß Fig. 2 in einer Wanne 64, dessen Grundriß im wesentlichen dem Grundriß der gesamten Maschine entspricht. Als eine Art Verlängerung der Säulen 12 stützt sich die Wanne 64 auf drei oder entsprechend mehr Auflagestellen 66 gegenüber dem Boden ab. In der Wanne 64 befindet sich unterhalb bzw. in unmittelbarer Nähe der Senkzone des Arbeitsbehälters 42 ein nicht näher dargestelltes Aggregat zur Reinigung und Aufbereitung der Arbeitsflüssigkeit bestehend aus Filtervorrichtung einer Ionenaustauschvorrichtung, Füll- und Spülpumpen mit zugehörigen Zu- und Abläufen in den Arbeitsbehälter 42 und ggf. einer Kühlvorrichtung zum Abkühlen des dielektrischen Wassers. Unterhalb der X-Konsole 16 ist außerdem Platz für die Aufnahme eines Behälters zum Auffangen etwaiger Lekageflüssigkeit oder Überlaufflüssigkeit aus de, Arbeitsbehälter 42 und zu deren Rückführung in das Aggregat zur Aufbereitung der Arbeitsflüssigkeit.

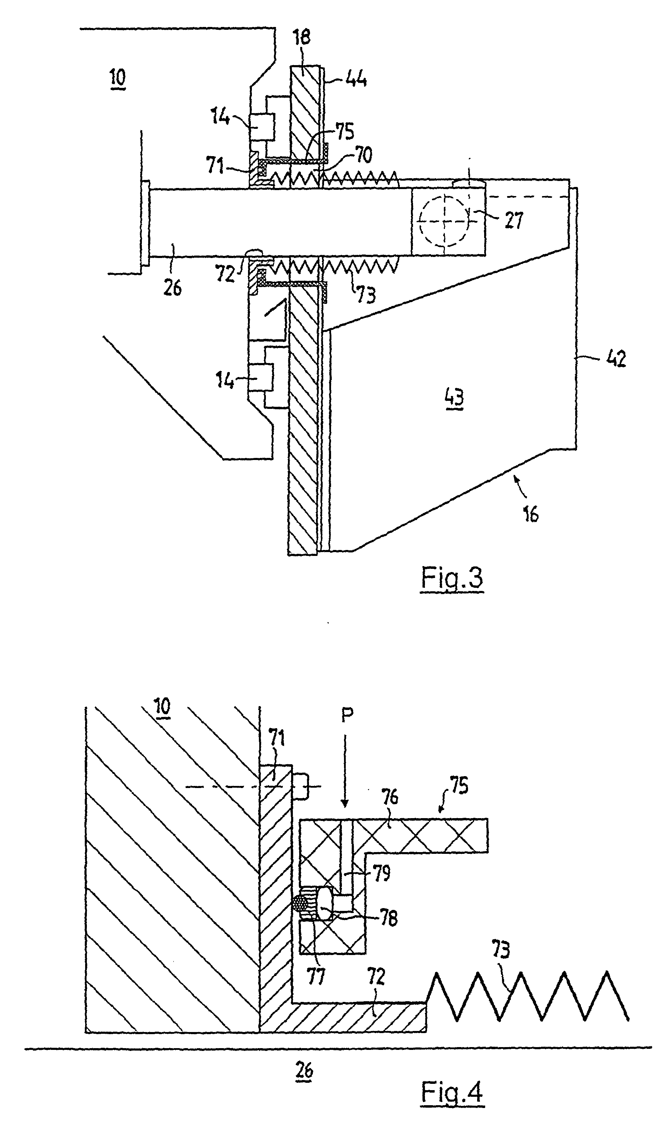

Wird bei der funkenerosiven Bearbeitung eine Arbeitsflüssigkeit verwendet, ist es beim vorliegenden Maschinenkonzept notwendig, den unteren Drahtführungsarm 26 durch eine Wand des Arbeitsbehälters 42 durchzuführen und diesen Durchführungsbereich gegen ein Austreten der Arbeitsflüssigkeit sorgfältig abzudichten. Darüber hinaus muß aber gewährleistet sein, daß zwischen unterem Drahtführungsarm und Werkstück eine ungehinderte zweidimensionale Bewegung in der X/Y-Ebene möglich bleibt. Fig. 3 zeigt einen Ausschnitt dieses kritischen Bereiches der Schneiderosionsmaschine gemäß den Figuren 1 und 2. Der an der Vorderseite des Maschinenkörpers 10 austretende Drahtführungsraum 26 ragt durch die X-Platte 18 der beweglichen X-Konsole 16 und die darauf befestigte Rückwand 44 des Arbeitsbehälters 42 in den Arbeitsraum der Maschine hinein. Die X-Platte 18 und die darauf liegende Behälterrückwand 44 weisen eine in X-Richtung orientierte langlochartige Öffnung auf, die so dimensioniert ist, daß der Drahtführungsarm 26 bei jeder X/Y-Verschiebungsbewegung berührungslos in den Arbeitsraum hineinragt. An der Außenseite des Maschinenkörpers 10 ist ein Dichtblech 71 angeordnet, welches sich etwa über die Breite der X-Konsole 16 in X-Richtung erstreckt und ein rundes Rohrstück 72 für die verschiebliche Durchführung des Drahtführungsarmes 26 aufweist. Das Dichtblech 71 dient als Auflagefläche einer weiter unten noch zu beschreibenden Gleitdichtung. Zwischen dem Dichtblech 71 und dem Drahtführungsarm 26 ist ein erstes Dichtungsmittel in Form einer zylindrischen Faltenbalgdichtung 73 vorgesehen, welche mit einem Ende am Umfang des Rohrstückes 73 und mit dem anderen Ende am äußeren Umfang des Drahtführungsarmes 26 befestigt ist. Derartige Faltenbalgdichtungen halten die Dichtigkeit auch bei relativ großer Verschiebung des Drahtführungsarmes 26 in Y-Richtung. Jedoch kann jede andere dehnbare elastische Dichtung oder Kombinationen von Dichtungen verwendet werden, welche in Reaktion auf die Bewegung des Armes 26 ausreichend dehnbar sind. Die Faltenbalgdichtung 73 verhindert in erster Linie, daß Arbeitsflüssigkeit aus dem Arbeitsbehälter 42 durch die Öffnung 70 und das Dichtblech 71 in den Maschinenkörper 10 ausläuft. Ein zweites Dichtungsmittel 75 ist zwischen dem Dichtblech 71 und der Arbeitsbehälterrückwand 44 vorgesehen, welches mit der Behälterrückwand 44 fest verbunden ist und gegenüber der Dichtblech 72 eine gleitfähige Abdichtung bei einer Bewegung der X-Konsole 16 und damit des Arbeitsbehälters 42 gegenüber dem unteren Drahtführungsarm 26 in X-Richtung gewährleistet und somit verhindert, daß Arbeitsflüssigkeit aus dem Arbeitsbehälter 42 durch die Öffnung 70 austreten kann. Mit einem solchen Dichtungsaufbau können sich der Arbeitsbehälter 42 und der Drahtführungsarm 26 relativ zueinander in X/Y-Richtung arbeitsmitteldicht und stoßfrei bewegen.

Fig. 4 zeigt eine vergrößerte Teilansicht das Dichtungsaufbaus in Fig. 3, wobei nur die Hälfte des an sich zur Achse des Führungsarmes symmetrischen Aufbaus dargestellt ist. Das Dichtungsmittel 75 ist mit einem Ende auf dem Dichtblech 71 verschieblich angeordnet und mit dem anderen Ende an der Rückwand 44 des Arbeitsbehälters 42 befestigt. Das Dichtungsmittel 75 ist mehrteilig und besteht aus einem konzentrischen Profil 76, das - wie in Fig. 3 ersichtlich - die Öffnung 70 ausfüllt und mit einem nach außen gefalzten Rand an der Behälterrückwand 44 starr befestigt ist. Das gegenüberliegende Ende des Profils 76 ist radial nach innen gerichtet und bildet eine dem Dichtblech 71 zugewandte Kontaktfläche. In dieser Kontaktfläche ist ein Dichtelement 77 mit niedrigem Gleitwiderstand eingelassen, z.B. ein mit Graphit geladenes PTFE-Profil, das unter Anpressung an das Dichtblech 71 für eine gleitfähige Abdichtung sorgt. In einem Hohlraum hinter dem Dichtelement 77 ist im Profil 76 ein elastisches Gummielement 78 angeordnet, das über eine Leitung 79 im Profil 76 mit Druckluft beaufschlagbar ist. Wird Druckluft in Richtung des Pfeils P in das konzentrische Profil 76 zugeführt, so wird die Gummidichtung 78 komprimiert und übt eine Kraft auf das Gleitelement 77 aus, welches seinerseits an die Oberfläche des Dichtbleches 71 gepreßt wird. Bei einer Verschiebung der X-Konsole 16 und damit des Arbeitsbehälters 42 gegenüber dem feststehenden Maschinenkörper 10 wird das zweite Dichtungselement 75 mitgenommen und gleitet im dichtenden Kontakt entlang der Außenseite des Dichtbleches 71.

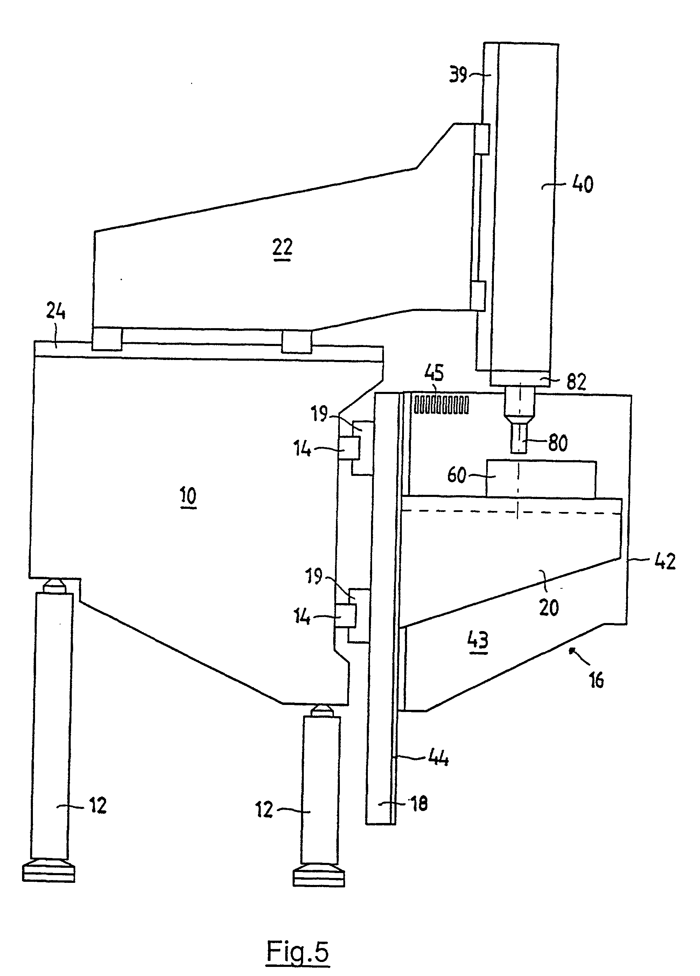

In Fig. 5 ist eine Senkerosionsmaschine dargestellt, welche ebenfalls nach dem erfindungsgemäßen Maschinenkonzept aufgebaut ist. Einander entsprechende Bauteile sind auch hier mit den gleichen Bezugszeichen gekennzeichnet. Die Senkerosionsmaschine umfaßt danach ebenfalls einen selbsttragenden zentralen Maschinenkörper 10, der auf Säulen 12 abgestützt ist. An der Vorderseite des Maschinenkörpers 10 ist an einer vertikalen Fläche eine X-Konsole 16 zur Bewegung eines Werkstückes 60 in X-Hauptachsenrichtung befestigt. Über einen davon unabhängigen an der Oberseite des Maschinenkörpers 10 verschiebbar gelagerten Y-Schlitten 22 ist eine Senkelektrode 80 in Y-Hauptachsenrichtung verschiebbar gelagert. Die Senkerosionsmaschine weist ebenfalls eine in Z-Richtung verschiebbare Pinole 40 auf, an deren vorderen Ende ein Elektrodenkopf 82 mit der darin untergebrachten Senkelektrode 80 zur Bearbeitung des Werkstückes 60 gehalten ist. An der X-Konsole 16 ist auch ein Arbeitsbehälter 42 für die Aufnahme einer etwaigen Arbeitsflüssigkeit in vertikaler Richtung absenkbar angeordnet.

Hervorzuheben dabei ist, daß die Grundelemente dieser Senkerosionsmaschine, wie Maschinenkörper 10, X-Konsole 16 (bis auf die fehlenden Durchbrüche in der X-Platte 18 und der Behälterrückwand 44 für den unteren Drahtführungsarm), ferner der Y-Schlitten 22 und die Pinole 40 denjenigen der Schneiderosionsmaschinen nach Fig. 1 entsprechen. Mit anderen Worten sind diese Module des erfindungsgemäßen Maschinenkonzepts nach Art eines Baukastens sowohl für eine Schneid- als auch für eine Senkerosionsmaschine verwendbar, mit dem Vorteil, daß höhere Stückzahlen erreicht werden und die Fertigungskosten gesenkt werden können.

## Patentansprüche

1. Funkenerosionsmaschine, mit:
- einem Maschinengestell, das einen zentralen Maschinenkörper (10) aufweist;
- einer Bearbeitungselektrode (32; 80) zum Bearbeiten eines Werkstückes (60), wobei die Bearbeitung durch eine Relativbewegung in die X/Y-Hauptachsenrichtung(en) zwischen Bearbeitungselektrode (32; 80) und Werkstück (60) erfolgt;
- einem ersten Achsschlitten (16) zum Bewegen des Werkstückes (60) in die eine Hauptachsenrichtung (X) und einem zweiten Achsschlitten (22) zum Bewegen der Bearbeitungselektrode (32; 80) in die andere Hauptachsenrichtung (Y), wobei der erste Achsschlitten (16) in einer im wesentlichen vertikalen Ebene unmittelbar am Maschinenkörper (10) in horizontaler Richtung verschiebbar angeordnet ist.

2. Funkenerosionsmaschine nach Anspruch 1, **dadurch gekennzeichnet, daß** der zweite Achsschlitten (22) in einer im wesentlichen horizontalen Ebene auf der Oberseite des Maschinenkörpers (10) angeordnet ist.

3. Funkenerosionsmaschine nach Anspruch 1 oder 2, **dadurch gekennzeichnet, daß** der erste Achsschlitten (22) einen verschiebbar gelagerten konsolenartigen Schlitten aufweist, auf welchem das Werkstück (60) in einer im wesentlichen horizontalen Lage montierbar ist.

4. Funkenerosionsmaschine nach Anspruch 3, **dadurch gekennzeichnet, daß** der konsolenartige Schlitten eine im wesentlichen vertikale Montageplatte (18) aufweist, welche über Führungsschlitten (19) auf einem Schienenpaar (14) am Maschinenkörper (10) geführt ist.

5. Funkenerosionsmaschine nach Anspruch 4, **dadurch gekennzeichnet, daß** unmittelbar auf der Montageplatte (18) eine balkenartige Werkstücksauflage (20) mit einer im wesentlichen horizontalen Werkstücksauflagefläche (21) montiert ist.

6. Funkenerosionsmaschine nach einem der Ansprüche 3 bis 5, **dadurch gekennzeichnet, daß** an dem konsolenartigen Schlitten ein vertikal absenkbarer Arbeitsbehälter (42) zur Aufnahme einer Arbeitsflüssigkeit angeordnet ist.

7. Funkenerosionsmaschine nach Anspruch 6, **dadurch gekennzeichnet, daß** der Arbeitsbehälter (42) einen beweglichen zur Behälterrückseite hin offenen Behälterteil (43) und eine feststehende Behälterrückwand (44) aufweist, welche unmittelbar auf der Montageplatte (18) befestigt ist oder die Montageplatte (18) selbst die Rückwand des Arbeitsbehälters (42) bildet.

8. Funkenerosionsmaschine nach Anspruch 7, **dadurch gekennzeichnet, daß** die Behälterrückwand (44) und/oder die Montageplatte (18) so weit verlängert ist/sind, daß der bewegliche Behälterteil (43) auch in abgesenkter Position an der Behälterrückwand (44) oder an der Montageplatte (18) anliegt.

9. Funkenerosionsmaschine nach Anspruch 7 oder 8, **dadurch gekennzeichnet, daß** zur Abdichtung des beweglichen Teils (43) des Arbeitsbehälters (42) gegenüber der Behälterrückwand (44) oder der Montageplatte (18) entlang der der Behälterrückwand (44) oder Montageplatte (18) zugewandten Kontaktflächen des beweglichen Teils eine mit einem Fluid beaufschlagbare Dichtung oder ein Dichtungsprofil aus einem Elastomer oder eine Kombination davon angeordnet ist.

10. Funkenerosionsmaschine nach einem der Ansprüche 6 bis 9, **dadurch gekennzeichnet, daß** die Maschine in einer Wanne (64) aufgestellt ist, wobei sich ein Aggregat zur Aufbereitung der Arbeitsflüssigkeit im Bereich unterhalb des absenkbaren Arbeitsbehälters (42) befindet.

11. Funkenerosionsmaschine nach einem der vorstehenden Ansprüche, **dadurch gekennzeichnet, daß** zur Anpassung der Bearbeitungselektrode (80) oder eines Elektrodenkopfes (28) an die jeweilige Werkstückshöhe ein Z-Antrieb (40) zur Verschiebung der Bearbeitungselektrode oder des Elektrodenkopfes in vertikaler Richtung vorgesehen ist.

12. Funkenerosionsmaschine zum Schneiderodieren, nach einem der vorstehenden Ansprüche, **dadurch gekennzeichnet, daß** die Bearbeitungselektrode eine zwischen einem oberen (28) und einem unteren Drahtführungskopf (27) geführte Drahtelektrode (32) ist, wobei der untere (27) und obere Drahtführungskopf (28) jeweils über einen entsprechenden Drahtführungsarm (26, 30) mit dem zweiten Achsschlitten (22) gekoppelt sind.

13. Funkenerosionsmaschine nach Anspruch 12, **dadurch gekennzeichnet, daß** im Übertragungsweg zwischen dem oberen Drahtführungskopf (28) und dem zweiten Achsschlitten (22) zwei rechtwinklig zueinander verstellbare Achsschlitten (36, 38) zum Verschieben des oberen Drahtführungskopfes (28) in einer horizontalen Ebene vorgesehen sind.

14. Funkenerosionsmaschine nach Anspruch 12 oder 13, **dadurch gekennzeichnet, daß** der untere Drahtführungsarm (26) durch eine langlochartige, in Richtung der einen Hauptachse (X) orientierte, Öffnung (70) der Montageplatte (18) des konsolenartigen Schlittens und der ggf. befestigten Arbeitsbehälterrückwand (44) in den Arbeitsraum der Maschine ragt, wobei der untere Drahtführungsarm (26) durch ein erstes in Axialrichtung des Drahtfürungsarmes elastisches Dichtungsmittel (73) und durch ein zweites quer zur Axialrichtung gleitfähiges Dichtungsmittel (75) gegenüber dem Arbeitsbehälter (42) abgedichtet ist.

15. Funkenerosionsmaschine nach Anspruch 14, **dadurch gekennzeichnet, daß** das erste Dichtungsmittel (73) eine den Drahtführungsarm (26) konzentrisch umgebende Faltenbalgdichtung ist.

16. Funkenerosionsmaschine nach Anspruch 14 oder 15, **dadurch gekennzeichnet, daß** das zweite Dichtungsmittel (75) zur gleitfähigen Abdichtung zwischen dem Drahtführungsarm (26) und dem Arbeitsbehälter (42) zumindest ein Gleitteil (77) und ein elastisches Ausgleichselement (78) aufweist, wobei das elastische Ausgleichselement (78) unter Beaufschlagung durch ein Fluid eine Kraft auf das Gleitteil (77) ausübt.

17. Funkenerosionsmaschine nach einem der vorstehenden Ansprüche, **dadurch gekennzeichnet, daß** der zentrale Maschinenkörper (10) auf mehreren Säulen (12) gegenüber dem Boden abgestützt ist.

## Claims

1. Electrical discharge machine, comprising:
- a machine frame which has a central machine body (10);
- a machining electrode (32; 80) for machining a workpiece (60), wherein the machining takes place by means of a relative movement in the X/Y main axis direction(s) between machining electrode (32; 80) and workpiece (60);
- a first axial slide (16) for moving the workpiece (60) in one main axis direction (X) and a second axial slide (22) for moving the machining electrode (32; 80) in the other main axis direction (Y), wherein the first axial slide (16) is arranged in an essentially vertical plane directly on the machine body (10) such that it can be displaced in the horizontal direction.

2. Electrical discharge machine according to Claim 1, **characterized in that** the second axial slide (22) is arranged in an essentially horizontal plane on the upper side of the machine body (10).

3. Electrical discharge machine according to Claim 1 or 2, **characterized in that** the first axial slide (22) has a displaceably mounted console-like slide on which the workpiece (60) can be mounted in an essentially horizontal position.

4. Electrical discharge machine according to Claim 3, **characterized in that** the console-like slide has an essentially vertical mounting plate (18) which is guided via guide slides (19) on a pair of rails (14) on the machine body (10).

5. Electrical discharge machine according to Claim 4, **characterized in that** a beam-like workpiece support (20) having an essentially horizontal workpiece support surface (21) is mounted directly on the mounting plate (18).

6. Electrical discharge machine according to one of Claims 3 to 5, **characterized in that** a vertically lowerable working container (42) for receiving a working liquid is arranged on the console-like slide.

7. Electrical discharge machine according to Claim 6, **characterized in that** the working container (42) has a moveable container part (43) which is open towards the rear of the container and a fixed container rear wall (44) which is attached directly to the mounting plate (18) or the mounting plate (18) itself forms the rear wall of the working container (42).

8. Electrical discharge machine according to Claim 7, **characterized in that** the container rear wall (44) and/or the mounting plate (18) is/are lengthened to the extent that the moving container part (43) bears against the container rear wall (44) or against the mounting plate (18) even in the lowered position.

9. Electrical discharge machine according to Claim 7 or 8, **characterized in that**, in order to seal the moving part (43) of the working container (42) relative to the container rear wall (44) or the mounting plate (18), a seal which can be acted upon by a fluid or a sealing profile made of an elastomer or a combination thereof is arranged along the contact surfaces of the moving part which face the container rear wall (44) or mounting plate (18).

10. Electrical discharge machine according to one of Claims 6 to 9, **characterized in that** the machine is placed in a trough (64), wherein a unit for processing the working liquid is located in the area below the lowerable working container (42).

11. Electrical discharge machine according to one of the preceding claims, **characterized in that**, in order to adapt the machining electrode (80) or an electrode head (28) to the respective workpiece height, a Z-drive (40) is provided for displacing the processing electrode or electrode head in the vertical direction.

12. Electrical discharge machine for erosive cutting, according to one of the preceding claims, **characterized in that** the machining electrode is a wire electrode (32) guided between an upper (28) and a lower (27) wire guide head, wherein the lower (27) and upper (28) wire guide heads are in each case connected to the second axial slide (22) via a corresponding wire guide arm (26, 30).

13. Electrical discharge machine according to Claim 12, **characterized in that** two axial slides (36, 38) for displacing the upper wire guide head (28) in a horizontal plane are provided in the transfer path between the upper wire guide head (28) and the second axial slide (22), said axial slides being adjustable at right angles to one other.

14. Electrical discharge machine according to Claim 12 or 13, **characterized in that** the lower wire guide arm (26) projects through an elongate opening (70) in the mounting plate (18) of the console-like slide and the possibly fixed rear wall (44) of the working container into the working space of the machine, the elongate opening being oriented in the direction of a main axis (X), wherein the lower wire guide arm (26) is sealed with respect to the working container (42) by a first sealing device (73) which is elastic in the axial direction of the wire guide arm and by a second sealing device (75) that can slide transversely to the axial direction.

15. Electrical discharge machine according to Claim 14, **characterized in that** the first sealing device (73) is a bellows seal which concentrically encloses the wire guide arm (26).

16. Electrical discharge machine according to Claim 14 or 15, **characterized in that** the second sealing device (75) for sliding sealing between the wire guide arm (26) and the working container (42) has at least one sliding part (77) and an elastic compensation element (78), wherein the elastic compensation element (78), when acted upon by a fluid, exerts a force on the sliding part (77).

17. Electrical discharge machine according to one of the preceding claims, **characterized in that** the central machine body (10) is supported relative to the floor on a number of columns (12).

## Revendications

1. Machine pour l'usinage par électroérosion comprenant :
- un bâti de machine qui présente un corps de machine central (10) ;
- une électrode d'usinage (32 ; 80) servant à usiner une pièce à usiner (60), où l'usinage est réalisé par un mouvement relatif dans la ou les directions d'axes principaux X/Y, entre l'électrode d'usinage (32 ; 80) et la pièce à usiner (60) ;
- un premier chariot d'axe (16) servant à déplacer la pièce à usiner (60) dans l'une des directions d'axes principaux (X), et un second chariot d'axe (22) servant à déplacer l'électrode d'usinage (32 ; 80) dans l'autre direction d'axe principal (Y), où le premier chariot d'axe (16) est disposé en étant mobile dans le sens horizontal, dans un plan pratiquement vertical placé directement sur le corps (10) de la machine.

2. Machine pour l'usinage par électroérosion selon la revendication 1, **caractérisée en ce que** le second chariot d'axe (22) est disposé dans un plan pratiquement horizontal, sur la partie supérieure du corps (10) de la machine.

3. Machine pour l'usinage par électroérosion selon la revendication 1 ou 2, **caractérisée en ce que** le premier chariot d'axe (16) présente un chariot à console monté de façon mobile, chariot sur lequel la pièce à usiner (60) peut être montée dans une position pratiquement horizontale.

4. Machine pour l'usinage par électroérosion selon la revendication 3, **caractérisée en ce que** le chariot à console présente une plaque de montage (18) pratiquement verticale, laquelle plaque de montage est guidée sur le corps (10) de la machine, par un chariot de guidage (19) monté sur une paire de rails (14).

5. Machine pour l'usinage par électroérosion selon la revendication 4, **caractérisée en ce qu'**un support (20), en forme de poutre, de la pièce à usiner, comprenant une surface de support (21) de la pièce à usiner, pratiquement horizontale, est montée directement sur la plaque de montage (18).

6. Machine pour l'usinage par électroérosion selon l'une quelconque des revendications 3 à 5, **caractérisée en ce qu'**un réservoir de travail (42) pouvant être abaissé verticalement et servant à recueillir un liquide de travail est disposé sur le chariot à console.

7. Machine pour l'usinage par électroérosion selon la revendication 6, **caractérisée en ce que** le réservoir de travail (42) présente une partie de réservoir mobile (43) ouverte en direction de la face arrière du réservoir, et une paroi arrière de réservoir fixe (44) qui est fixée directement sur la plaque de montage (18) ou bien la plaque de montage (18) elle-même forme la paroi arrière du réservoir de travail (42).

8. Machine pour l'usinage par électroérosion selon la revendication 7, **caractérisée en ce que** la paroi arrière (44) du réservoir et/ou la plaque de montage (18) est /sont prolongée(s) d'une manière telle, que la partie mobile (43) du réservoir, également lorsqu'elle est en position abaissée, est en appui sur la paroi arrière (44) du réservoir ou sur la plaque de montage (18).

9. Machine pour l'usinage par électroérosion selon la revendication 7 ou 8, **caractérisée en ce que** pour assurer l'étanchéité de la partie mobile (43) du réservoir de travail (42), par rapport à la paroi arrière (44) du réservoir ou par rapport à la plaque de montage (18), une garniture d'étanchéité pouvant être sollicitée par un fluide ou bien un profilé d'étanchéité en élastomère ou bien une combinaison de ces éléments est disposé(e) le long des surfaces de contact de la partie mobile, tournées vers la paroi arrière (44) du réservoir ou vers la plaque de montage (18).

10. Machine pour l'usinage par électroérosion selon l'une quelconque des revendications 6 à 9, **caractérisée en ce que** la machine est placée dans une cuve (64), où un groupe servant à préparer le liquide de travail se trouve dans la zone placée au-dessous du réservoir de travail (42) pouvant être abaissé.

11. Machine pour l'usinage par électroérosion selon l'une quelconque des revendications précédentes, **caractérisée en ce que**, pour l'adaptation de l'électrode d'usinage (80) ou d'une tête d'électrode (28), à la hauteur respective de la pièce à usiner, il est prévu un entraînement Z (40) servant à déplacer l'électrode d'usinage ou la tête d'électrode, dans le sens vertical.

12. Machine pour l'usinage par électroérosion servant à l'étincelage de coupe selon l'une quelconque des revendications précédentes, **caractérisée en ce que** l'électrode d'usinage est un fil-électrode (32) guidé entre une tête supérieure (28) de guide-fil et une tête inférieure (27) de guide-fil, où la tête inférieure (27) du guide-fil et la tête supérieure (28) du guide-fil sont couplées, respectivement, au second chariot d'axe (22), par un bras de guide-fil correspondant (26, 30).

13. Machine pour l'usinage par électroérosion selon la revendication 12, **caractérisée en ce que**, sur la trajectoire de transmission entre la tête supérieure (28) du guide-fil et le second chariot d'axe (22), il est prévu deux chariots d'axe (36, 38) mobiles à angles droits l'un par rapport à l'autre et servant au déplacement de la tête supérieure (28) du guide-fil, dans un plan horizontal.

14. Machine pour l'usinage par électroérosion selon la revendication 12 ou 13, **caractérisée en ce que** le bras inférieur (26) du guide-fil pénètre dans l'espace de travail de la machine, par une ouverture (70) - de forme oblongue, orientée dans le sens de l'un des axes principaux (X) - de la plaque de montage (18) du chariot à console et de la paroi arrière (44) du réservoir de travail éventuellement fixée, où le bras inférieur (26) du guide-fil est rendu étanche, par rapport au réservoir de travail (42), par un premier moyen d'étanchéité élastique (73) dans le sens axial du bras du guide-fil, et par un second moyen d'étanchéité (75) pouvant coulisser de manière transversale par rapport au sens axial.

15. Machine pour l'usinage par électroérosion selon la revendication 14, **caractérisée en ce que** le premier moyen d'étanchéité (73) est une garniture d'étanchéité à soufflet entourant concentriquement le bras (26) du guide-fil.

16. Machine pour l'usinage par électroérosion selon la revendication 14 ou 15, **caractérisée en ce que** le second moyen d'étanchéité (75) présente au moins une pièce coulissante (77) et un élément de compensation élastique (78) pour assurer l'étanchéité, de manière coulissante, entre le bras (26) du guide-fil et le réservoir de travail (42), où l'élément de compensation élastique (78), lorsqu'il est sollicité par un fluide, exerce une force sur la pièce coulissante (77).

17. Machine pour l'usinage par électroérosion selon l'une quelconque des revendications précédentes, **caractérisée en ce que** le corps central (10) de la machine est en appui sur plusieurs colonnes (12), par rapport au sol.
